# DEMANDE DE BREVET EUROPEEN

(11) **EP 4 831 579 A1**
(43) Date de publication de la demande: **28.10.2026**
(21) Numéro de dépôt: 26171872.0
(22) Date de dépôt: 13.04.2026
(51) Int. Cl.: G01B 5/252

(54) **DISPOSITIF ET PROCÉDÉ POUR MESURER UN DÉFAUT D'ALIGNEMENT ENTRE LES AXES D'AU MOINS DEUX ORIFICES CYLINDRIQUES DE DEUX PIÈCES ADJACENTES**

(30) Priorité: 25.04.2025 FR 2504408
(71) Demandeur: Airbus SAS, 31700 Blagnac Cedex (FR); Airbus Operations SAS, 31060 Toulouse (FR)
(72) Inventeur: MATHEIS, Xavier, 31060 TOULOUSE (FR); COLMAGRO, David, 31770 COLOMIERS (FR)
(74) Mandataire: Gevers & Orès

(57) **Abrégé**

- Le dispositif (1) comporte une pièce de positionnement (2) comprenant un tronçon cylindrique (3) inséré dans un premier orifice cylindrique et une plaque de positionnement (4) insérée dans le second orifice cylindrique, deux bras pivotants (13A, 13B) écartés angulairement l'un de l'autre sous l'action d'un ressort pour venir au contact de la surface interne du second orifice cylindrique, et une aiguille rotative (22) tournant en fonction du pivotement des bras pivotants (13A, 13B), par rapport à un cadran (26) pourvu d'au moins une échelle (27, 28) représentant les valeurs d'au moins un paramètre de défaut d'alignement entre les deux orifices cylindriques, le dispositif (1) permettant ainsi de mesurer, de façon simple et précise, la valeur d'au moins un paramètre illustrant un défaut d'alignement, cette valeur pouvant notamment être utilisée pour réaliser des opérations correctives afin de corriger le défaut d'alignement lors de l'assemblage des deux pièces.

## Description

### Domaine technique

La présente invention concerne un dispositif et un procédé pour mesurer un défaut d'alignement entre les axes d'au moins deux orifices cylindriques de deux pièces adjacentes.

### Etat de la technique

Plus particulièrement, bien que non exclusivement, la présente invention s'applique à l'assemblage de pièces ou d'éléments de structure d'un aéronef, notamment d'un avion de transport.

Lors de l'assemblage de deux pièces, des erreurs d'alignement peuvent apparaître entre les axes d'au moins deux orifices cylindriques des deux pièces à assembler, par exemple entre une chape et une patte de fixation coopérantes.

Pour compenser de telles erreurs, il est connu d'utiliser des douilles excentriques.

A titre d'exemple, pour l'assemblage d'un empennage vertical d'un aéronef, il existe une procédure de montage de douilles excentriques pour l'empennage vertical, qui nécessite une rotation manuelle des douilles excentriques jusqu'à ce qu'elles soient concentriques pour pouvoir monter des axes.

Pour l'assemblage d'une poutre ventrale (« keel beam ») au fuselage de l'aéronef, il faut effectuer le même type d'opérations manuelles, c'est-à-dire faire tourner les différentes douilles (ou pièces) excentriques jusqu'à trouver la bonne position angulaire permettant l'insertion complète des douilles (ou pièces) excentriques.

Dans les deux exemples précédents, pour lesquelles le défaut d'alignement entre les orifices cylindriques considérés n'est pas connu, les opérations manuelles, dont certaines doivent être effectuées sans vue directe sur l'opération en cours de réalisation, sont sources de problèmes de qualité, génèrent une charge de travail inutile et peuvent nécessiter une formation spécifique pour les opérateurs.

Il existe donc un besoin de pouvoir disposer d'une solution permettant de mesurer un défaut d'alignement d'au moins deux orifices cylindriques (destinés à être agencés de façon coaxiale) de pièces adjacentes devant être assemblées ensemble.

### Exposé de l'invention

La présente invention a pour objet de proposer une solution pour répondre au besoin précité. Elle concerne un dispositif pour mesurer un défaut d'alignement entre les axes d'au moins deux orifices cylindriques de deux pièces adjacentes, les deux orifices étant agencés de façon coaxiale.

Selon l'invention, ledit dispositif comporte au moins :
- une pièce de positionnement comprenant un tronçon cylindrique configuré pour pouvoir être inséré dans un premier desdits orifices cylindriques en étant en contact pivotant et glissant, et une plaque de positionnement lié au tronçon cylindrique et configurée pour pouvoir être insérée dans le second orifice cylindrique en étant en contact pivotant et glissant ;
- deux bras pivotants qui sont montés sur la plaque de positionnement en étant positionnés de façon symétrique par rapport à une bissectrice d'un secteur cylindrique de la plaque de positionnement, les bras pivotants étant aptes à être écartés angulairement l'un de l'autre sous l'action d'un ressort de manière à venir, chacun, au contact de la surface interne du second orifice cylindrique par une extrémité libre lorsque la plaque de positionnement est insérée dans ledit second orifice cylindrique ;
- une aiguille rotative configurée pour tourner en fonction du pivotement et de l'écartement angulaire des deux bras pivotants ; et
- un cadran pourvu d'au moins une échelle représentant les valeurs d'un paramètre de défaut d'alignement entre les deux orifices cylindriques, l'aiguille rotative étant mobile par rapport à l'échelle du cadran,
les bras pivotants, l'aiguille et l'échelle étant configurés pour que l'aiguille indique sur l'échelle la valeur du paramètre de défaut d'alignement lorsque le tronçon cylindrique est inséré dans le premier orifice cylindrique et la plaque de positionnement est insérée dans le second orifice cylindrique avec les deux bras pivotants en contact avec la surface interne dudit second orifice cylindrique.

Ainsi, grâce à l'invention, on dispose d'un dispositif permettant de mesurer, de façon simple et précise, la valeur d'au moins un paramètre illustrant un défaut d'alignement entre les axes d'au moins deux orifices cylindriques de deux pièces adjacentes. La connaissance de cette valeur permet, notamment, de réaliser des opérations correctives, pour corriger le défaut d'alignement, lors de l'assemblage des deux pièces.

Dans le cadre de la présente invention, on entend par contact pivotant et glissant, entre deux éléments, un contact qui est, à la fois :
- pivotant, l'un des éléments pouvant tourner par rapport à l'autre (à savoir autour de l'autre ou à l'intérieur de l'autre, selon le positionnement radial) ; et
- glissant, l'un des éléments étant en contact avec toute sa surface (interne ou externe) de la surface (externe ou interne) de l'autre élément, et cet élément pouvant coulisser par rapport à l'autre élément (s'il n'en est pas empêché par un autre moyen).

Dans un mode de réalisation préféré, chacun desdits bras pivotants est pourvu d'un doigt et ledit dispositif comporte un élément d'attache amovible configuré pour pouvoir maintenir ensemble les doigts dans une position rapprochée des deux bras pivotants.

En outre, avantageusement, le cadran est pourvu de deux échelles de valeurs de paramètre de défaut d'alignement, dont l'une représente des valeurs de distance entre les axes longitudinaux des deux orifices cylindriques et dont l'autre représente des valeurs d'angles de positionnement d'éléments excentriques d'un système à double excentrique permettant de corriger le défaut d'alignement.

Par ailleurs, de façon avantageuse, la plaque de positionnement est pourvue d'une pointe agencée suivant la bissectrice d'un secteur cylindrique de la plaque de positionnement.

Dans un premier mode de réalisation simplifié, la pièce de positionnement est configurée pour que le tronçon cylindrique puisse être inséré directement dans le premier orifice cylindrique, en étant en contact pivotant et glissant, et pour que la plaque de positionnement puisse être insérée directement dans le second orifice cylindrique, en étant en contact pivotant et glissant.

En outre, dans un second mode de réalisation préféré, le dispositif comporte au moins deux bagues d'ajustement, l'une desdites bagues d'ajustement est destinée, d'une part, à être montée dans le premier orifice cylindrique en étant en contact pivotant et glissant, et d'autre part, à recevoir le tronçon cylindrique de la pièce de positionnement en étant en contact pivotant et glissant, et l'autre bague d'ajustement est destinée, d'une part, à être montée dans le second orifice cylindrique en étant en contact pivotant et glissant, et d'autre part, à recevoir la plaque de positionnement de la pièce de positionnement en étant en contact pivotant et glissant.

De plus, avantageusement, chacune desdites bagues d'ajustement est pourvue d'un rebord annulaire à une extrémité longitudinale.

La présente invention concerne, également, un procédé pour mesurer, à l'aide d'un dispositif de mesure tel que celui précité, un défaut d'alignement entre les axes d'au moins deux orifices cylindriques de deux pièces adjacentes, les deux orifices cylindriques étant agencés de façon coaxiale.

Selon l'invention, ledit procédé comporte au moins les étapes successives suivantes :
- une étape de montage pour monter la pièce de positionnement, en insérant le tronçon cylindrique de la pièce de positionnement dans un premier desdits orifices cylindriques de manière à obtenir un contact pivotant et glissant et en insérant la plaque de positionnement de la pièce de positionnement dans le second orifice cylindrique de manière à obtenir un contact pivotant et glissant ;
- une étape de libération pour libérer les deux bras pivotants, une fois libérés les deux bras pivotants s'écartant l'un de l'autre sous l'action d'un ressort, jusqu'à ce que chacun vienne au contact de la surface interne du second orifice cylindrique par une extrémité libre, l'écartement angulaire des deux bras pivotants entraînant la rotation de l'aiguille rotative ; et
- une étape de lecture pour lire, en fonction de la position de l'aiguille rotative par rapport à l'échelle du cadran, la valeur du paramètre de défaut d'alignement entre les deux orifices cylindriques, qui est indiquée par l'aiguille rotative sur l'échelle.

Avantageusement, ledit procédé comporte également une étape de mise en place d'un élément d'attache pour maintenir ensemble les doigts dans une position rapprochée des deux bras pivotants, et à l'étape de libération, l'élément d'attache est retiré des deux doigts.

La présente invention concerne, en outre, une méthode de mise en place d'un système de liaison à double excentrique dans au moins deux orifices cylindriques de deux pièces adjacentes.

Selon l'invention, la méthode comporte au moins un procédé tel que celui précité pour mesurer un défaut d'alignement entre les axes des deux orifices cylindriques, et une étape d'installation pour installer le système de liaison à double excentrique en positionnant angulairement les excentriques de manière à corriger le défaut d'alignement mesuré par ledit procédé.

### Brève description des figures

Les figures annexées feront bien comprendre comment l'invention peut être réalisée. Sur ces figures, des références identiques désignent des éléments semblables.
La figure 1 est une vue, en perspective, d'un mode de réalisation particulier d'un dispositif de mesure.
La figure 2 est une vue éclatée, en perspective, du dispositif de mesure de la figure 1.
La figure 3 est une vue partielle en perspective montrant la mise en place de bagues d'ajustement dans deux orifices de deux pièces adjacentes, pour lesquels on prévoit de mesurer un défaut d'alignement.
La figure 4 est une vue schématique en coupe, montrant un défaut d'alignement de deux orifices de diamètres différents.
La figure 5 est le schéma synoptique d'un procédé de mesure.
La figure 6 est une vue, en perspective, d'une partie supérieure du dispositif de mesure de la figure 1, sur lequel un élément d'attache de deux doigts est en place.
La figure 7 est une vue de dessus du dispositif de mesure, montrant les valeurs affichées sur un cadran dudit dispositif de mesure.
La figure 8 est une coupe longitudinale partielle d'un système de liaison à double excentrique en place dans une patte de fixation et une chape de manière à corriger un défaut d'alignement.
La figure 9 est une vue schématique, en section transversale, montrant le positionnement de deux éléments excentriques.
La figure 10 est le schéma synoptique d'une méthode d'installation d'un système de liaison à double excentrique.

### Description détaillée

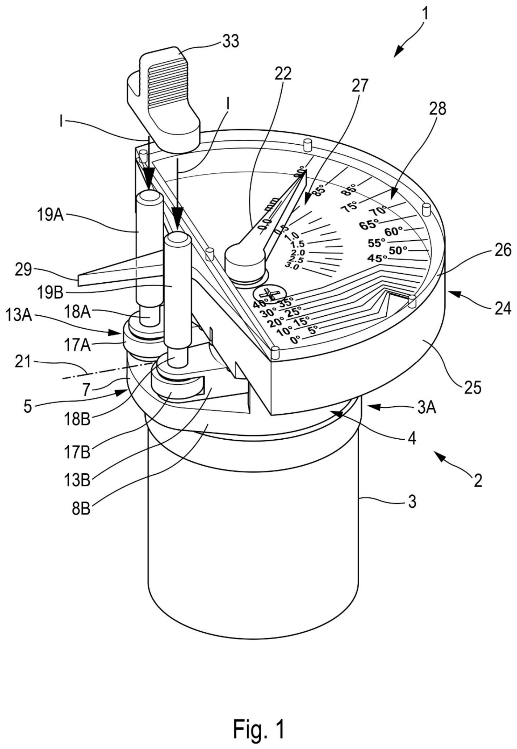

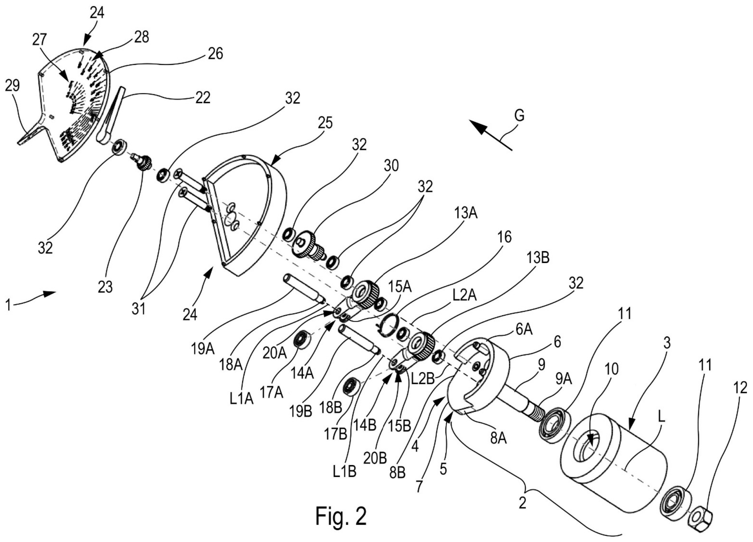

Le dispositif de mesure (ci-après « dispositif 1 ») permettant d'illustrer l'invention et représenté, de façon schématique, dans un mode de réalisation particulier sur les figures 1 et 2, est destiné à être utilisé par un opérateur pour mesurer un défaut d'alignement entre les axes d'au moins deux orifices cylindriques.

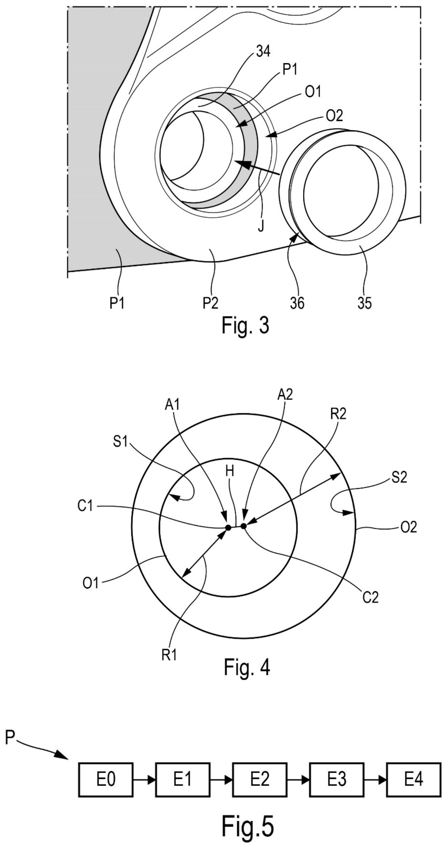

Plus précisément, il est destiné à mesurer le défaut d'alignement entre les axes de deux orifices cylindriques O1 et O2 de deux pièces P1 et P2 adjacentes, comme représenté schématiquement sur la figure 3.

Les deux orifices cylindriques O1 et O2 (de rayons R1 et R2 respectifs (figure 4)) sont de diamètres différents, le diamètre de l'orifice cylindrique O1 étant plus petit que le diamètre de l'orifice cylindrique O2, et ils sont agencés, en principe, de façon coaxiale. Malgré cet agencement prévu pour être coaxial, les deux orifices cylindriques O1 et O2 ne sont pas parfaitement coaxiaux et leurs axes longitudinaux A1 et A2 sont décalés l'un par rapport à l'autre d'une distance H, comme illustré sur la figure 4.

La figure 4 est une vue schématique en coupe transversale montrant les orifices cylindriques O1 et O2, dont les axes longitudinaux A1 et A2 qui sont orthogonaux au plan de coupe représenté, passent par les centres C1 et C2 de ces orifices cylindriques O1 et O2.

A titre d'illustration, les deux pièces P1 et P2 peuvent correspondre à deux éléments de structure d'un aéronef, en particulier d'un avion de transport, devant être assemblés ensemble.

Le dispositif 1 comporte une pièce de positionnement 2, comme représenté sur les figures 1 et 2. Cette pièce de positionnement 2 comprend :
- un tronçon cylindrique 3 présentant un axe longitudinal L. Le tronçon cylindrique 3 est configuré pour pouvoir être inséré dans l'orifice cylindrique O1 présentant le plus petit diamètre, comme précisé ci-dessous, et ceci en étant en contact pivotant et glissant ; et
- une plaque de positionnement 4 qui est lié au tronçon cylindrique 3 à une extrémité supérieure 3A (figure 1).

Dans le cadre de la présente invention :
- les termes « supérieur » et « inférieur » relatifs au dispositif 1 font référence à des positions relatives au sens indiqué par une flèche G sur la figure 2, à savoir « supérieur » dans le sens de la flèche G et « inférieur » en sens opposé à celui de la flèche G ;
- l'adjectif « longitudinal » fait référence à la direction de l'axe L (figure 2) ;
- les adjectifs « interne » et « externe » sont définis par rapport à des directions radiales par rapport à cet axe L, à savoir pour « interne » en s'approchant de l'axe L et pour « externe » en s'éloignant de l'axe L ; et
- l'adjectif « transversal » fait référence à un plan orthogonal à l'axe L.

La plaque de positionnement 4 comprend une plaque plane 5 agencée sensiblement orthogonalement à l'axe longitudinal L du tronçon cylindrique 3. La plaque de positionnement 4 est configurée pour pouvoir être insérée dans l'orifice cylindrique O2, en étant en contact pivotant et glissant, comme précisé ci-dessous.

Comme représenté sur la figure 2, la plaque plane 5 comprend le long de son contour :
- une première partie 6 en arc de cercle (de rayon sensiblement égal au rayon R2 de l'orifice O2), pourvue d'un rebord 6A ;
- une seconde partie 7 en arc de cercle (de rayon inférieur au rayon R2 de l'orifice O2), formant un secteur circulaire ; et
- deux bords droits 8A et 8B entre les deux parties 5 et 7 en arc de cercle.

La pièce de positionnement 2 comprend, sous la plaque de positionnement 4 (à son extrémité inférieure), un tenon 9 cylindrique présentant un secteur fileté 9A à son extrémité libre. Le tenon 9 est destiné à être introduit dans des roulements à rouleaux 11 intégrés dans une ouverture cylindrique 10 (centrale, d'axe longitudinal L) du tronçon cylindrique 3.

La plaque de positionnement 4 est maintenue à l'aide d'un écrou 12 vissé sur le secteur fileté 9A du tenon 9. La plaque de positionnement 4 est ainsi liée de façon pivotante au tronçon cylindrique 3.

Le dispositif 1 comporte également deux bras pivotants 13A et 13B qui sont montés sur la plaque de positionnement 4. Ces deux bras pivotants 13A et 13B peuvent tourner autour d'axes L2A et L2B parallèles à l'axe longitudinal L. Les deux bras pivotants 13A et 13B sont agencés de façon symétrique par rapport à une bissectrice 21 (figure 1) du secteur cylindrique 7 de la plaque de positionnement 4.

Les deux bras pivotants 13A et 13B sont écartés angulairement l'un de l'autre sous l'action d'un ressort 16 (figure 2). Les deux bras pivotants 13A et 13B sont aptes à être écartés angulairement de manière à venir au contact de la surface interne S2 (figure 4) de l'orifice cylindrique O2 par un roulement 17A, 17B, lorsque la plaque de positionnement 4 est insérée dans l'orifice cylindrique O2, comme précisé ci-dessous.

Comme représenté sur la figure 2, le bras pivotant 13A comprend, à son extrémité libre 14A, une chape 15A dans laquelle est montée le roulement 17A qui tourne autour d'un tronçon 18A d'un doigt 19A. Le tronçon 18A traverse, à cet effet, des ouvertures 20A de la chape 15A. Le doigt 19A est agencé selon un axe L1A parallèle à l'axe longitudinal L.

De même, le bras pivotant 13B comprend à son extrémité libre 14B, une chape 15B dans laquelle est montée le roulement 17B qui tourne autour d'un tronçon 18B d'un doigt 19B. Le tronçon 18B traverse, à cet effet, des ouvertures 20B de la chape 15B. Le doigt 19B est agencé selon un axe L1B parallèle à l'axe longitudinal L.

Le dispositif 1 comporte également une aiguille rotative 22 configurée pour tourner en fonction du pivotement et de l'écartement angulaire des deux bras pivotants 13A et 13B, comme indiqué ci-dessous.

L'aiguille rotative 22 est montée sur un arbre 23. L'aiguille rotative 22 est installée dans un boîtier 24 sensiblement semi-circulaire. Ce boîtier 24 comprend une base 25 (pourvue d'un rebord) sur laquelle est fixée un cadran 26. Le cadran 26 est transparent, ce qui permet de voir l'aiguille rotative 22 à travers le cadran 26. Le cadran 26 est pourvu d'au moins une échelle 27, 28.

Dans un mode de réalisation particulier, l'arbre 23 permettant la rotation de l'aiguille rotative 22 est pourvu d'une roue dentée et est associé à une pièce 30 également pourvue d'une roue dentée. L'arbre 23 et la pièce 30 forment un engrenage susceptible de générer un mouvement démultipliant (d'un facteur multiplicateur, par exemple 2 ou 3) de sorte que si les bras pivotants 13A et 13B s'écartent (ou s'approchent) l'un de l'autre d'un angle donné, l'aiguille rotative 22 tourne dans un sens (ou dans l'autre) d'un angle démultiplié correspondant à cet angle donné multiplié par le facteur multiplicateur.

L'aiguille rotative 22 est mobile par rapport à l'échelle 27, 28 du cadran 26. L'échelle 27, 28 affiche des valeurs d'au moins un paramètre de défaut d'alignement entre les deux orifices cylindriques.

Dans l'exemple représenté sur les figures 1, 2, 6 et 7, le cadran 26 est pourvu de deux échelles 27 et 28 (de valeurs de paramètres de défaut d'alignement). L'échelle 27 représente des valeurs de distance (exprimées en millimètre (mm)) entre les axes longitudinaux A1 et A2 des deux orifices cylindriques O1 et O2 permettent d'indiquer la valeur de la distance H entre les axes A1 et A2 (figure 4). L'échelle 28 représente des valeurs d'angles (exprimées en degré (°)) de positionnement d'éléments excentriques d'un système à double excentrique permettant de corriger le défaut d'alignement, comme précisé ci-dessous.

Ainsi, le dispositif 1 fournit à l'opérateur deux types de valeurs :
- une valeur en distance, indiquant la distance H entre les deux axes A1 et A2 des orifices cylindriques O1 et O2, par exemple par incréments de 0,25 millimètres ; et
- une valeur angulaire, utilisée pour positionner des éléments excentriques.

Le dispositif 1 fournit également une direction de référence correspondant à la direction indiquée par une pointe 29 du cadran 26. Comme représenté notamment sur les figures 1 et 2, le cadran 26 est pourvue d'une pointe 29 qui est agencée suivant la bissectrice 21 du secteur cylindrique 7 de la plaque de positionnement 4.

Par ailleurs, les bras pivotants 13A et 13B, l'aiguille rotative 22 et l'échelle 27, 28 sont configurés pour que l'aiguille rotative 22 indique sur l'échelle 27, 28 la valeur du paramètre de défaut d'alignement, lorsque le dispositif 1 est en place dans les orifices cylindriques O1 et O2, à savoir lorsque le tronçon cylindrique 3 est inséré dans l'orifice cylindrique O1 et la plaque de positionnement 4 est insérée dans l'orifice cylindrique O2 avec les deux bras pivotants 13A et 13B en contact avec la surface interne S2 de l'orifice cylindrique O2.

Sur la figure 2, on a également représenté d'autres pièces du dispositif 1, dont des vis 31 et des roulements (ou galets) 32.

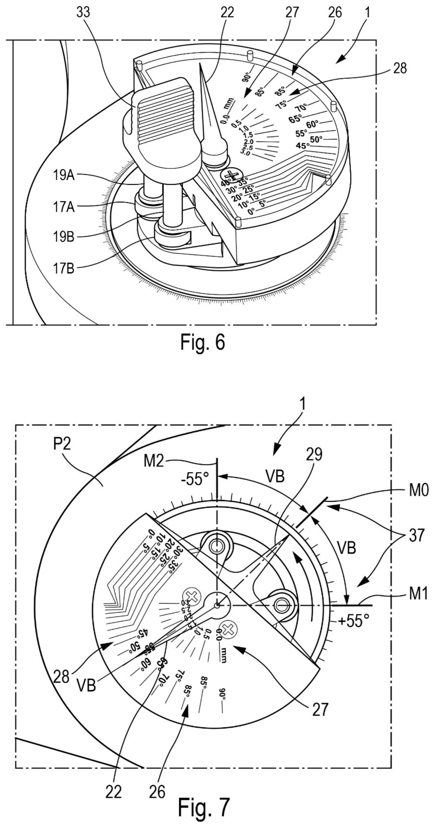

Par ailleurs, le dispositif 1 comporte un élément d'attache amovible 33 (figures 1 et 6). Cet élément d'attache 33 est configuré pour pouvoir maintenir ensemble les doigts 19A et 19B dans une position rapprochée des deux bras pivotants 13A et 13B, comme représenté sur la figure 6.

Dans un premier mode de réalisation simplifié (non représenté), la pièce de positionnement 2 est configurée pour que :
- le tronçon cylindrique 3 puisse être inséré directement dans l'orifice cylindrique O1 de la pièce P1, et ceci en étant en contact pivotant et glissant ; et
- la plaque de positionnement 4 puisse être insérée directement dans l'orifice cylindrique O2 de la pièce P2, et ceci en étant en contact pivotant et glissant.

On entend par contact pivotant et glissant, entre deux éléments, un contact qui est, à la fois :
- pivotant, c'est-à-dire que l'un des éléments peut tourner par rapport à l'autre (à savoir autour de l'autre ou à l'intérieur de l'autre, selon le positionnement radial) ; et
- glissant, c'est-à-dire que l'un des éléments est en contact par toute sa surface interne ou externe avec la surface externe ou interne de l'autre élément et il peut coulisser par rapport à cet autre élément (s'il n'en est pas empêché par un autre moyen).

En outre, dans un second mode de réalisation préféré, représenté sur la figure 3, le dispositif 1 comporte des bagues d'ajustement 34 et 35.

La bague d'ajustement 34 est destinée à la fois :
- à être montée dans l'orifice cylindrique O1 (figure 4) de la pièce P1 en étant en contact pivotant et glissant avec sa surface interne S1 ; et
- à recevoir le tronçon cylindrique 3 de la pièce de positionnement 2 en contact pivotant et glissant.

De même, la bague d'ajustement 35 est destinée à la fois :
- à être montée dans l'orifice cylindrique O2 (figure 4) de la pièce P2 en étant en contact pivotant et glissant avec sa surface interne S2 ; et
- à recevoir la plaque de positionnement 4 de la pièce de positionnement 2 en contact pivotant et glissant.

Par conséquent, grâce à de telles bagues d'ajustement 34 et 35, le dispositif 1 peut être utilisé pour des orifices présentant des diamètres différents et variés. Pour ce faire, il convient d'utiliser un jeu approprié de bagues d'ajustement 34 et 35, pour lesquelles, à chaque fois, le diamètre extérieur est adapté au diamètre de l'orifice O1, O2 de la pièce P1, P2 et le diamètre intérieur est adapté au diamètre externe de la partie correspondante (tronçon cylindrique 3 ou plaque de positionnement 4) de la pièce de positionnement 2 du dispositif 1. Chaque bague d'ajustement 34, 35 est telle que ses surfaces externe et interne sont coaxiales en section transversale.

Ce second mode de réalisation apporte une grande flexibilité pour l'utilisation du dispositif 1 (de mesure).

De plus, dans un mode de réalisation particulier, chacune des bagues d'ajustement 34 et 35 est pourvue d'un rebord annulaire 36 (figure 5) à une extrémité longitudinale. Ce rebord annulaire 36 sert à bloquer la translation de la bague d'ajustement lors de son installation, dans le sens illustré par une flèche J sur la figure 3 pour la bague d'ajustement 35.

Le dispositif 1, tel que décrit ci-dessus, est apte à être utilisé par un opérateur pour mettre en œuvre un procédé P (de mesure) représenté sur la figure 5. Ce procédé P a pour objet de mesurer, à l'aide dudit dispositif 1, un défaut d'alignement entre les axes A1 et A2 d'au moins deux orifices cylindriques O1 et O2 (de diamètres différents) de deux pièces adjacentes P1 et P2, les deux orifices cylindriques O1 et O2 étant agencés de façon coaxiale.

Pour ce faire, le procédé P comporte au moins les étapes successives suivantes :
- une étape de montage E1 pour monter l'élément d'attache 33 sur le dispositif 1 dans le but de maintenir ensemble les doigts 19A et 19B dans une position rapprochée des deux bras pivotants 13A et 13B ;
- une étape de mise en place E2 pour mettre en place la pièce de positionnement 2 ;
- une étape de libération E3 pour libérer les deux bras pivotants 13A et 13B ; et
- une étape de lecture E4 pour lire, sur l'échelle 27, 28 du cadran 26, la valeur du paramètre de défaut d'alignement entre les deux orifices cylindriques O1 et O2, qui est indiquée par l'aiguille rotative 22 sur l'échelle 27, 28.

Le procédé P peut également comporter une étape préliminaire E0 qui est mise en œuvre (antérieurement aux étapes E1 à E4) dans le cas où :
- le diamètre du tronçon cylindrique 3 de la pièce de positionnement 2 est inférieur au diamètre de l'orifice cylindrique O1 de manière à générer un jeu ne permettant pas de réaliser un contact glissant ; et/ou
- le diamètre de la plaque de positionnement 4 de la pièce de positionnement 2 est inférieur au diamètre de l'orifice cylindrique O2 de manière à générer un jeu ne permettant pas de réaliser un contact glissant.

L'étape préliminaire E0 est donc mis en œuvre pour le second mode de réalisation préféré (précité), pour lequel le dispositif 1 comporte au moins deux bagues d'ajustement 34 et 35, de tailles appropriées. La bague d'ajustement 34 est telle qu'elle présente un diamètre extérieur lui permettant d'être montée dans l'orifice cylindrique O1 en étant en contact pivotant et glissant, et un diamètre intérieur lui permettant d'entourer le tronçon cylindrique 3 de la pièce de positionnement 2 en contact pivotant et glissant. De plus, la bague d'ajustement 35 est telle qu'elle présente un diamètre extérieur lui permettant d'être montée dans l'orifice cylindrique O2 en étant en contact pivotant et glissant, et un diamètre intérieur lui permettant d'entourer la plaque de positionnement 4 de la pièce de positionnement 2 en contact pivotant et glissant.

En revanche, l'étape préliminaire E0 (précitée) n'est pas mise en œuvre pour le premier mode de réalisation simplifié, pour lequel la pièce de positionnement 2 est telle que, à la fois :
- le tronçon cylindrique 3 puisse être inséré directement dans l'orifice cylindrique O1, en étant en contact pivotant et glissant ; et
- la plaque de positionnement 4 puisse être insérée directement dans l'orifice cylindrique O2, en étant en contact pivotant et glissant.

A l'étape préliminaire E0, un opérateur installe un jeu de bagues d'ajustement 34 et 35 approprié.

Pour ce faire, l'opérateur insère la bague d'ajustement 34 dans l'orifice cylindrique O1 jusqu'à ce que son rebord entre en contact avec la pièce P1. Puis, il insère la bague d'ajustement 35, dans le sens illustré par la flèche J sur la figure 3, dans l'orifice cylindrique O2 jusqu'à ce que son rebord 36 entre en contact avec la pièce P2.

Ainsi, grâce au plus grand diamètre intérieur de la bague d'ajustement 35, le dispositif 1 pourra être inséré (dans le sens de la flèche J de la figure 3) pour effectuer la mesure de défaut d'alignement.

On décrit, à présent, plus en détail les étapes E1 à E4. Les étapes E1 à E4, du procédé P sont mises en œuvre quel que soit le mode de réalisation considéré (c'est-à-dire avec ou sans bagues d'ajustement 34 et 35).

Dans la description suivante, on décrit la mise en place du dispositif 1 pour un mode de réalisation comprenant des bagues d'ajustement 34 et 35. Les étapes E1 à E4 s'appliquent de façon similaire lorsque le dispositif 1 est inséré directement dans les orifices cylindriques O1 et O2.

A l'étape E1, l'opérateur met en place l'élément d'attache 33 sur le dispositif 1 pour maintenir ensemble les doigts 19A et 19B dans une position rapprochée des deux bras pivotants 13A et 13B.

Pour ce faire, l'opérateur serre manuellement les doigts 19A et 19B pour les approcher l'un de l'autre et place l'élément d'attache 33, dans le sens illustré par des flèches I sur la figure 1. L'aiguille rotative 22 affiche alors une valeur inférieure à 0 sur l'échelle 27 du cadran 26, comme représenté sur la figure 6.

L'élément d'attache 33 garantit que les doigts 19A et 19B ne peuvent pas heurter les bords de la bague d'ajustement 35 lors de l'insertion du dispositif 1 dans les orifices cylindriques.

A l'étape de mise en place E2 qui suit, l'opérateur met en place la pièce de positionnement 2 du dispositif 1. Pour ce faire, il insère le tronçon cylindrique 3 de la pièce de positionnement 2 dans l'orifice cylindrique O1 (présentant le plus petit diamètre) de manière à obtenir un contact pivotant et glissant. Puis, il insère la plaque de positionnement 4 de la pièce de positionnement 2 dans l'orifice cylindrique O2.

La fonction de la plaque de positionnement 4 est de donner à l'opérateur la bonne position angulaire pour insérer le dispositif 1. La bonne position angulaire est celle où la plaque de positionnement 4 peut être entièrement insérée à l'intérieur de la bague d'ajustement 35. Pour ce faire, l'opérateur tourne le dispositif 1 jusqu'à ce que la plaque de positionnement 4 puisse s'insérer complètement dans l'orifice cylindrique O2, puis il l'enfonce jusqu'à son arrêt grâce à l'extrémité supérieure 3A.

Ensuite, à l'étape de libération E3 qui suit, l'opérateur libère les deux bras pivotants 13A et 13B, en retirant l'élément d'attache 33 des deux doigts 19A et 19B. Une fois libérés, les deux bras pivotants 13A et 13B s'écartent l'un de l'autre sous l'action du ressort 16 (figure 2), et ceci jusqu'à ce que chacun vienne au contact de la surface interne S2 (figure 4) de l'orifice cylindrique O2 par son roulement 17A, 17B. L'écartement angulaire des deux bras pivotants 13A et 13B entraîne la rotation de l'aiguille rotative 22.

Généralement les deux bras pivotants 13A et 13B s'écartent jusqu'à ce qu'un premier doigt entre en contact avec la surface intérieure de la bague d'ajustement 35. Sous l'action du ressort 16, l'ensemble du dispositif 1 tourne alors sur lui-même (grâce aux roulements à rouleaux 11) jusqu'à ce que l'autre doigt entre également en contact avec la surface intérieure de la bague d'ajustement 35. Le dispositif 1 se trouve alors dans sa position finale.

L'aiguille rotative 22 prend une position (angulaire) correspondant à l'écartement angulaire des deux bras pivotants 13A et 13B dans cette position finale.

L'opérateur peut alors lire la ou les valeurs du ou des paramètres de défaut d'alignement à l'étape de lecture E4. L'opérateur peut lire sur l'échelle 27, 28 du cadran 26, la valeur du paramètre de défaut d'alignement entre les deux orifices cylindriques O1, O2, qui est indiquée par l'aiguille rotative 22.

Dans l'exemple de la figure 7, sur le cadran 26 transparent, l'aiguille rotative 22 indique sur l'échelle 27 une valeur métrique de l'ordre de 1,5 mm et sur l'échelle 28 une valeur angulaire de l'ordre de 55°.

Ainsi, grâce au dispositif 1 et au procédé P, tels que décrits ci-dessus, on dispose d'une solution permettant de mesurer, de façon simple et précise, la valeur d'au moins un paramètre illustrant un défaut d'alignement entre les axes A1 et A2 d'au moins deux orifices cylindriques O1 et O2 de deux pièces P1 et P2 adjacentes. La connaissance de cette valeur ou de ces valeurs permet, notamment, de réaliser des opérations correctives (par exemple des positionnements angulaires appropriés), pour corriger le défaut d'alignement, lors de l'assemblage des deux pièces P1 et P2.

Le procédé P tel que décrit ci-dessus, ainsi que les résultats obtenus, peuvent être utilisés dans différentes applications.

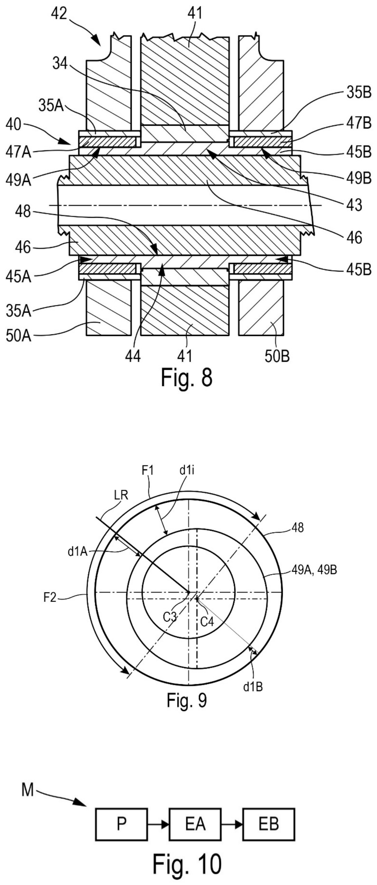

En particulier, le procédé peut être utilisé dans une méthode M (figure 10) d'installation d'un système 40 de liaison à double excentrique dans au moins deux orifices cylindriques de deux pièces adjacentes.

Dans l'exemple représenté sur la figure 8, le système 40 est utilisé pour lier une patte de fixation 41 à une chape 42 pourvue de deux branches 50A et 50B.

Dans une application particulière, le système 40 est destiné à lier une extrémité d'une poutre ventrale (« keel beam ») à une partie de fuselage de l'aéronef. Dans cette application particulière, on utilise plusieurs systèmes 40. Pour chaque système 40, la patte de fixation est solidaire de la partie de fuselage et la chape est solidaire de l'extrémité de la poutre ventrale.

Comme représenté partiellement sur la figure 8, le système 40 comporte :
- un manchon principal 43 comprenant un tronçon central 44 destiné à être inséré dans une bague d'ajustement 34 montée dans la patte de fixation 41. Le tronçon central 44 présente en section transversale une surface externe circulaire ayant un premier diamètre. Le manchon principal 43 comprend également deux tronçons d'extrémité 45A et 45B liés au tronçon central 44, respectivement de part et d'autre longitudinalement du tronçon central 44. Les surfaces externes des deux tronçons d'extrémité 45A et 45B présentent en section transversale une forme circulaire ayant un même second diamètre. Ce second diamètre est différent dudit premier diamètre et les centres desdites surfaces externes circulaires des deux tronçons d'extrémité 45A et 45B sont décalés par rapport au centre de la surface externe circulaire du tronçon central 44 ;
- un manchon interne 46 qui est logé dans le manchon principal 44, sa surface externe étant en contact avec une surface interne du manchon principal 44 ; et
- deux douilles excentriques 47A et 47B. Chacune des douilles excentriques 47A et 47B est montée sur l'un des tronçons d'extrémité 45A, 45B avec une surface interne circulaire en contact avec la surface externe circulaire du tronçon d'extrémité correspondant et est insérée dans une bague d'ajustement 35A, 35B montée dans une branche 50A, 50B de la chape 42. Chacune desdits douilles excentriques 47A et 47B présente une surface externe circulaire en section transversale dont le centre est décalé par rapport au centre de sa surface interne circulaire.

Le système 40 comprend ainsi deux paires d'éléments excentriques, à savoir les éléments excentriques 48 et 49A et les éléments excentriques 48 et 49B. L'élément excentrique 48 est obtenu par le décalage entre le tronçon d'extrémité 45A, 45B correspondant et le tronçon central 44 du manchon principal 4 et l'élément excentrique 49A, 49B est obtenu par le décalage entre les surfaces interne et externe de la douille excentrique 47A, 47B correspondante.

Ces deux éléments excentriques 48 et 49A (ou 49B) permettent, par un positionnement en rotation angulaire approprié du manchon principal 43 et donc du tronçon central 44 dans la bague d'ajustement 34, obtenu en tournant le manchon principal 43, et par un positionnement angulaire des douilles excentriques 47A et 47B par rapport au manchon principal 43, obtenu en tournant les douilles excentriques 47A et 47B par rapport au manchon principal 43, compenser un défaut (ou erreur) d'alignement entre l'orifice traversant de la patte de fixation 41 et les orifices traversants de la chape 42

Comme représenté à titre d'illustration sur la figure 9, la distance d1i entre la surface externe de l'élément excentrique 48 et la surface externe de l'élément excentrique 49A, 49B dans le plan transversal, varie en fonction de leurs positions angulaires. Sur la figure 9, on a représenté une ligne de référence LR passant par les centres C3 et C4 respectifs. Cette ligne de référence LR est telle que le long de ladite ligne de segment de référence LR, d'un côté, la distance d1A entre les surfaces externes est la plus longue, et de l'autre côté, la distance d1B entre les surfaces externes est la plus courte. A partir des positions angulaires relatives de la figure 9, en tournant un élément dans le sens illustré par une flèche F1 (ou dans le sens opposé illustré par une flèche F2), la distance d1i diminue de la distance d1A à la distance d1B.

Pour l'installation du système 40, la méthode M comporte :
- le procédé P tel que décrit ci-dessus, pour mesurer un défaut d'alignement entre les axes des deux orifices cylindriques ;
- une étape de marquage EA ; et
- une étape d'installation EB.

A l'étape d'installation EB, un opérateur met en place le système 40 de liaison à double excentrique, en positionnant angulairement les éléments excentriques 48, 49A et 49B de manière à corriger le défaut d'alignement mesuré par le procédé P.

Dans cette méthode M, lors de la mise en œuvre du procédé P, on réalise, après l'étape E4, l'étape de marquage EA comprenant les opérations suivantes.

Comme représenté sur la figure 7, la pointe 29 indique alors une direction relative à une position médiane. Une marque M0 est réalisée sur la surface 37 de la pièce P2 à cette position médiane.

De plus, l'aiguille 22 indique comme valeur angulaire VB. Dans l'exemple de la figure 7, l'aiguille 22 indique 55°, comme valeur angulaire V. Cette valeur angulaire VB correspond à la moitié de l'angle total de défaut entre les éléments excentriques.

A partir de la marque M0, deux autres marques M1 et M2 sont réalisées sur la surface 37 de la pièce P2, à savoir une première marque M1 à un angle correspondant à ladite valeur angulaire VB (55°) dans le sens horaire par rapport à la marque M0 et une seconde marque M2 correspondant à ladite valeur angulaire VB (55°) dans le sens antihoraire par rapport à la marque M0, comme représenté sur la figure 7.

A ce stade, le dispositif 1 (de mesure) peut être retiré, et l'opérateur peut placer les éléments excentriques 48, 49A (ou 49B) à l'aide des marques M0, M1 et M2, au cours de l'étape d'installation EB.

Plus précisément, afin d'orienter facilement les éléments excentriques, l'opérateur utilise une ligne de référence de chacun des éléments excentriques 48, 49A (ou 49B), telle que la ligne de référence LR de la figure 9, de préférence une découpe qui est généralement présente sur chacun des éléments excentriques, la fonction principale d'une telle découpe étant de bloquer l'élément excentrique lorsqu'il est en place.

Lors de l'insertion du manchon principal 43 et d'une douille excentrique 47A, 47B, l'opérateur positionne la ligne de référence de l'un des éléments excentriques, par exemple du manchon principal 43, sur la marque M1 (à + 55°) et la ligne de référence de l'autre élément excentrique, par exemple de la douille excentrique 47A, 47B sur la marque M2 (à - 55°). Puis, il maintient ensemble tous les éléments du système 40 à l'aide de moyens usuels (non représentés).

## Revendications

1. Dispositif pour mesurer un défaut d'alignement entre les axes (A1, A2) d'au moins deux orifices cylindriques (O1, O2) de deux pièces (P1, P2) adjacentes, les deux orifices cylindriques (O1, O2) étant agencés de façon coaxiale, **caractérisé en ce qu'**il comporte au moins :
- une pièce de positionnement (2) comprenant un tronçon cylindrique (3) configuré pour pouvoir être inséré dans un premier (O1) desdits orifices cylindriques (O1, O2) en étant en contact pivotant et glissant, et une plaque de positionnement (4) liée de façon pivotante au tronçon cylindrique (3) et configurée pour pouvoir être insérée dans le second orifice cylindrique (O2) en étant en contact pivotant et glissant ;
- deux bras pivotants (13A, 13B) qui sont montés sur la plaque de positionnement (4) en étant positionnés de façon symétrique par rapport à une bissectrice (21) d'un secteur cylindrique (7) de la plaque de positionnement (4), les bras pivotants (13A, 13B) étant aptes à être écartés angulairement l'un de l'autre sous l'action d'un ressort (16) de manière à venir, chacun, au contact de la surface interne (S2) du second orifice cylindrique (O2) par une extrémité libre (17A, 17B) lorsque la plaque de positionnement (4) est insérée dans ledit second orifice cylindrique (O2) ;
- une aiguille rotative (22) configurée pour tourner en fonction du pivotement et de l'écartement angulaire des deux bras pivotants (13A, 13B) ; et
- un cadran (26) pourvu d'au moins une échelle (27, 28) représentant les valeurs d'au moins un paramètre de défaut d'alignement entre les deux orifices cylindriques (O1, O2), l'aiguille rotative (22) étant mobile par rapport à l'échelle (27, 28) du cadran (26),
les bras pivotants (13A, 13B), l'aiguille rotative (22) et l'échelle (27, 28) étant configurés pour que l'aiguille rotative (22) indique sur l'échelle (27, 28) la valeur du paramètre de défaut d'alignement lorsque le tronçon cylindrique (3) est inséré dans le premier orifice cylindrique (O1) et la plaque de positionnement (4) est insérée dans le second orifice cylindrique (O2) avec les deux bras pivotants (13A, 13B) en contact avec la surface interne (S2) dudit second orifice cylindrique (O2).

2. Dispositif selon la revendication 1,
**caractérisé en ce que** chacun desdits bras pivotants (13A, 13B) est pourvu d'un doigt (19A, 19B) et **en ce que** ledit dispositif (1) comporte un élément d'attache (33) amovible, configuré pour pouvoir maintenir ensemble les doigts (19A, 19B) dans une position rapprochée des deux bras pivotants (13A, 13B).

3. Dispositif selon l'une des revendications 1 et 2,
**caractérisé en ce que** le cadran (26) est pourvu de deux échelles (27, 28) de valeurs de paramètre de défaut d'alignement, dont l'une (27) représente des valeurs de distance entre les axes longitudinaux (A1, A2) des deux orifices cylindriques (O1, O2) et dont l'autre (28) représente des valeurs d'angles de positionnement d'éléments excentriques (48, 49A, 49B) d'un système (40) à double excentrique permettant de corriger le défaut d'alignement.

4. Dispositif selon l'une quelconque des revendications précédentes, **caractérisé en ce que** le cadran (26) est pourvue d'une pointe (29) agencée suivant la bissectrice (21) du secteur cylindrique (7) de la plaque de positionnement (4).

5. Dispositif selon l'une quelconque des revendications 1 à 4,
**caractérisé en ce que** la pièce de positionnement (2) est configurée pour que le tronçon cylindrique (3) puisse être inséré directement dans le premier orifice cylindrique, en étant en contact pivotant et glissant, et pour que la plaque de positionnement (4) puisse être insérée directement dans le second orifice cylindrique, en étant en contact pivotant et glissant.

6. Dispositif selon l'une quelconque des revendications 1 à 4,
**caractérisé en ce qu'**il comporte au moins deux bagues d'ajustement (34, 35), **en ce que** l'une (34) desdites bagues d'ajustement (34, 35) est destinée, d'une part, à être montée dans le premier orifice cylindrique (O1) en étant en contact pivotant et glissant, et d'autre part, à recevoir le tronçon cylindrique (3) de la pièce de positionnement (2) en étant en contact pivotant et glissant, et **en ce que** l'autre bague d'ajustement (35) est destinée, d'une part, à être montée dans le second orifice cylindrique (O2) en étant en contact pivotant et glissant, et d'autre part, à recevoir la plaque de positionnement (4) de la pièce de positionnement (2) en étant en contact pivotant et glissant.

7. Dispositif selon la revendication 6,
**caractérisé en ce que** chacune desdites bagues d'ajustement (34,35) est pourvue d'un rebord annulaire (36) à une extrémité longitudinale.

8. Procédé pour mesurer, à l'aide d'un dispositif de mesure selon l'une quelconque des revendications 1 à 7, un défaut d'alignement entre les axes (A1, A2) d'au moins deux orifices cylindriques (O1, O2) de deux pièces (P1, P2) adjacentes, les deux orifices cylindriques (01, 02) étant agencés de façon coaxiale, **caractérisé en ce qu'**il comporte au moins les étapes successives suivantes :
- une étape de montage (E2) pour monter la pièce de positionnement (2), en insérant le tronçon cylindrique (3) de la pièce de positionnement (2) dans un premier (O1) desdits orifices cylindriques (O1, O2) de manière à obtenir un contact pivotant et glissant et en insérant la plaque de positionnement (4) de la pièce de positionnement (2) dans le second orifice cylindrique (O2) de manière à obtenir un contact pivotant et glissant ;
- une étape de libération (E3) pour libérer les deux bras pivotants (13A, 13B), une fois libérés les deux bras pivotants (13A, 13B) s'écartant l'un de l'autre sous l'action d'un ressort (16), jusqu'à ce que chacun vienne au contact de la surface interne (S2) du second orifice cylindrique (O2) par une extrémité libre (17A, 17B), l'écartement angulaire des deux bras pivotants (13A, 13B) entraînant la rotation de l'aiguille rotative (22) ; et
- une étape de lecture (E4) pour lire, en fonction de la position de l'aiguille rotative (22) par rapport à l'échelle (27, 28) du cadran (26), la valeur du paramètre de défaut d'alignement entre les deux orifices cylindriques (O1, O2), qui est indiquée par l'aiguille rotative (22) sur l'échelle (27,28).

9. Procédé selon la revendication 8,
**caractérisé en ce qu'**il comporte une étape (E1) de mise en place d'un élément d'attache (33) pour maintenir ensemble les deux doigts (19A, 19B) dans une position rapprochée des deux bras pivotants (13A, 13B) et **en ce qu'**à l'étape de libération (E3), l'élément d'attache (33) est retiré des deux doigts (19A, 19B).

10. Méthode de mise en place d'un système de liaison à double excentrique dans au moins deux orifices cylindriques de deux pièces adjacentes,
**caractérisé en ce qu'**elle comporte au moins un procédé (P) selon l'une des revendications 8 et 9 pour mesurer un défaut d'alignement entre les axes (A1, A2) des deux orifices cylindriques (O1, O2), et une étape d'installation (EB) pour installer le système (40) de liaison à double excentrique en positionnant angulairement les éléments excentriques (48, 49A, 49B) de manière à corriger le défaut d'alignement mesuré par ledit procédé (P)
